(19) Europäisches Patentamt
European Patent Office
Office européen des brevets

(11) EP 4 668 139 A1

(12) EUROPEAN PATENT APPLICATION

(43) Date of publication:
24.12.2025 Bulletin 2025/52

(51) International Patent Classification (IPC):
**G06F 18/24** (2023.01)

(21) Application number: 24183306.0

(22) Date of filing: 20.06.2024

(52) Cooperative Patent Classification (CPC):
**G06F 18/24;** G06F 2218/00; G06F 2218/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Airbus Defence and Space GmbH
82024 Taufkirchen (DE)**

(72) Inventor: **ROTTMAIER, Michael
82024 Taufkirchen (DE)**

(74) Representative: **LKGLOBAL
Lorenz & Kopf Patentanwalt
Attorney at Law PartG mbB
Brienner Straße 11
80333 München (DE)**

Remarks:
Amended claims in accordance with Rule 137(2) EPC.

(54) **METHOD AND SYSTEM FOR DETECTION AND CLASSIFICATION OF WIRELESS SIGNALS IN SIGNAL RECONNAISSANCE APPLICATIONS**

(57) The present disclosure relates to a signal classification method, comprising the steps of receiving a signal data frame comprising signal data; segmenting the signal data frame to generate a plurality of segments; performing a signal detection for each segment to identify signal segments comprising a signal; and determining a signal attribute for each signal segment; clustering a set of signal segments of the plurality of signal segments to generate a signal cluster; and determining a geometric shape of the signal cluster. The present disclosure further relates to a system having a pre-processing component that prepares training data with signal frames and annotation data, defining signal classifiers and intervals. The machine learning component is trained using training-frames, guided by a cost function that includes a classification error function and a cognition component, which forms a signal characteristics matrix for accurate signal classification.

Fig. 1

EP 4 668 139 A1

**Description**

The present invention relates to the field of signal intelligence (SIGINT) and electronic intelligence (ELINT), particularly to the automated detection, classification, and characterization of signals based on raw in-phase/quadrature (I/Q) data.

TECHNICAL BACKGROUND

Methods in this field involve manual Fourier transforms to create spectrograms for signal detection and classification, requiring extensive domain expertise and manual parameter tuning. The detected signals are then cataloged through manual signal description and naming, attempting to associate these with their corresponding emitters.

Known methods for signal detection and classification on I/Q data can be limited. A bounding box can be utilized to describe the start/end times and min/max frequencies of the signal, which fails to capture the intricate geometrical properties of the signals within the time-frequency domain. For instance, two signals may share identical bounding box parameters but differ significantly in their geometric properties. The bounding box approach may not reveal these differences.

Generally, only a single data-driven feature vector for each detected signal is provided. This level of information capture may not resolve the time dynamics of a signal and cannot be filtered for sub-bandwidths to extract frequency bandwidth-specific characteristics. Thereby, extracting features that describe the beginning of the signal in time or characteristics that relate to a part of the frequency bandwidth only can be limited.

SUMMARY

The objective addressed by the present invention is to overcome the limitations of the prior art by providing a method and system for automated signal detection, classification, and characterization that may capture the dynamic nature and geometric properties of signals in the time-frequency domain. The invention aims to provide a fine-granular signal description that can capture emitter-specific characteristics, thereby facilitating the automated cataloging of signals without the need for manual intervention.

Thereto a comprehensive approach is introduced that captures both temporal and spectral characteristics of signals. This method and system enhance the accuracy and efficiency of signal classification, making it suitable for real-time military applications and forensic post-processing.

In this approach geometric properties of signals within the time-frequency domain are considered. For instance, two signals with identical start/end times and min/max frequencies may exhibit distinct shapes (e.g., sine wave vs. ellipse-like). By analyzing these geometrical features, a more comprehensive characterization of detected signals can be provided.

Instead of relying on a single feature vector per signal, features at multiple resolutions can be extracted. This realizes the advantage of capturing time dynamics and frequency-specific characteristics. For example, signal beginnings, specific frequency bands, and other relevant attributes can be identified.

The I/Q data is processed to identify signals. For each detected signal, a bounding box can be computed as well as additional geometric descriptors. These descriptors include shape parameters, symmetry, and curvature. By taking these characteristics into account, different types of signals can be distinguished, even if their basic parameters overlap.

To address the limitations of single feature vectors, features across different bandwidths can be extracted: characteristics related to the signal's onset, duration, and/or modulation can be captured. Also, frequency-specific features, such as spectral peaks, bandwidth, and modulation rates can be extracted.

The method and system can be implemented to enhance electronic-support-measurement (ESM) sensors to rapidly detect and classify new signal types without human intervention. In particular, an Observe-Orient-Decide-Act cycle can be enhanced for improved operational efficiency.

According to a first aspect the present invention relates to a method for detection and classification of wireless signals in signal reconnaissance applications. The method can comprise receiving a signal data frame comprising signal data in the signal domain, preferably the frequency-time-domain, and segmenting the signal data frame to generate a plurality of segments.

The method can further comprise performing a signal detection for each segment to identify signal segments comprising a signal and determining, for each signal segment, at least one signal attribute. Additionally, the method can comprise clustering a set of signal segments of the plurality of signal segments to generate a signal cluster and determining a geometric shape, in particular in the signal domain, preferably the frequency-time-domain, of the signal cluster.

Detecting and classifying of wireless signals can refer to a systematic process for identifying and categorizing wireless signals based on their characteristics. The method involves analyzing signal data to determine the presence of signals and classifying them into specific types (e.g., modulation schemes, frequency bands, etc.). For example, when receiving a signal data frame containing raw signal data captured by a radio receiver, this data can be processed to detect and classify wireless signals present in the frequency-time domain.

A signal data frame can represent a discrete segment of signal data. It can consist of a matrix or array where one axis represents time, and the other axis represents frequency. Each data entry in the matrix may comprise a signal intensity or power at a specific time-frequency point. For example, the signal data frame can comprise a 2D matrix spanning time and frequency, where each value corresponds to a signal parameter, e.g., the signal strength, at a specific time and frequency bin. The signal data can comprise I/Q-data, where each data element comprises two components, an in-phase component and a quadrature component.

The signal domain can be defined by the space in which the signal is represented. For example, the signal data can be represented in a frequency-time-domain, i.e. an orthogonal two-dimensional space. The signal data can also be represented in a multidimensional space. Thereto, also the geometric shape can be multidimensional. The geometric shape may be a dimensional representation of the signal data where the geometric shape

Segmenting can involve dividing the signal data frame into smaller, non-overlapping segments. Each segment corresponds to a specific time interval and frequency range. Segmentation simplifies subsequent analysis and allows to focus on localized signal features.

Signal detection aims to identify segments within the signal data frame that contain actual signals (as opposed to noise). Various algorithms and thresholds can be applied to determine whether a segment exhibits signal-like characteristics. For example, energy-based thresholding can be used to identify segments where the signal power exceeds a predefined threshold. Additionally and/or alternatively, a function relating to detecting structured signals in comparison to random noise can be used.

Signal attributes can refer to specific characteristics or properties of a detected signal. These may include modulation type, center frequency, bandwidth, signal-to-noise ratio (SNR), phase etc. Signal attributes can relate to a modulation type describing the modulation scheme used by the signal (e.g., AM, FM, QPSK, BPSK), a center frequency indicating the central frequency of the signal, a bandwidth specifying the frequency range occupied by the signal, a Signal-to-Noise Ratio (SNR) quantifying the quality of the signal relative to background noise, a phase representing the phase angle of the signal, a symbol rate referring to the rate at which symbols are transmitted, pulse width measuring the duration of individual pulses, a crest factor indicating the peak-to-average power ratio of the signal, a spectral shape describing the spectral distribution (e.g., flat, Gaussian, spiky), a frequency deviation, Time of Arrival (TOA) indicating when the signal arrives relative to a reference time, a Doppler shift reflecting the change in frequency due to relative motion (e.g., in radar signals), virtual parameters generated by machine learning models to characterize signals beyond traditional physical parameters.

Signal attributes can be customized based on the specific application and context. They are essential not only for real-time signal processing but also for post-processing, forensic analysis, and emitter identification. Considering both physical and virtual parameters can enhance the ability to understand and exploit wireless signals effectively.

Clustering may involve grouping similar signal segments together based on their attributes. This can achieve the advantage of organizing detected signals into meaningful clusters, simplifying subsequent classification and analysis. A signal cluster may represent a collection of similar signals. Clusters may contain signals of the same type, i.e. sharing a signal attribute, and/or related types, i.e. having signal attributes belonging to an attribute group (e.g., different signal channels).

The method can identify cohesive signal segments as a signal cluster. Herein cohesive signal segments may be defined as signal segments having the same and/or correlated signal classifiers and having a relative distance between neighboring signal segments below a predetermined threshold. Signal segments within the predetermined threshold can be associated to a signal cluster. The threshold can be defined in a segment distance, e.g., adjacent segments, a distance of one segment, or a distance of two segments.

The joint representation of signal characteristics in both the frequency and time dimensions enables the analysis of how signal properties change over time and across different frequency components. This can also enable visualization of signal behavior in vector space, preferably a two-dimensional space. The visualization can be a projection of a multi-dimensional signal into a 2D-space.

The geometric shape can refer to the form, structure, or pattern exhibited by a set of signal segments. Relating to a signal cluster, the geometric shape can describe how the signals are distributed in the frequency-time domain.

Clustering can comprise performing a Density-Based Spatial Clustering of Applications with Noise (DBSCAN). Preferably clustering can comprise identifying dense regions in the signal data in the corresponding data space, where a specified number of signal segments are disposed within a radius $\varepsilon$, i.e. a cluster can be determined according to a signal segment density.

Thereto, clustering may comprise categorizing signal segments as core segments, border segments, or noise segments, respectively empty segments. Core segments can be defined by having at least a predetermined number of other signal segments within their $\varepsilon$ neighborhood. Thereby, core segments can serve as anchors for the corresponding cluster. Border segments can be disposed in the vicinity of core segments but may not meet the criteria to be core segments themselves. Empty segments may not comprise a signal, i.e., may only comprise noise.

The method can comprise forming clusters around core segments by connecting signal segments within the $\varepsilon$ radius of each other. If a signal segment is within this radius of a core segment, it can be added to the cluster of that core segment. This chaining effect can continue until no further signal segments can be added to any cluster. The clustering can provide the ability to handle outliers and discover clusters of arbitrary shapes.

Analyzing the geometric shape, i.e. signal distribution, of signal clusters, can enable differentiating of signal types. Also, based on the cluster, anomalies can be detected. Specifically, detecting deviations from expected geometric shapes can indicate abnormal or unexpected signals. This can achieve the advantage that interference, unauthorized transmissions, and/or security threats can be detected based on identifying outliers or unusual patterns.

The method can be applied continuously to monitor the frequency-time domain to track changes in signal behavior overtime. Detectingsudden shifts in a geometric shape can, for example, signal network congestion, channel interference, or equipment malfunction.

The signal data frame can comprise a spectrogram, a matrix representing comprising values in a frequency-time domain and/or wavelet-time-domain, i.e. comprising wavelet transformations.

The signal detection can be performed using neural networks, e.g. Convolutional Neural Networks and/or Recurrent Neural Networks. The signal detection can comprise frequency pattern recognition and/or temporal signal pattern recognition according to learned signal patterns. The signal detection can also employ an autoencoder, i.e., an unsupervised neural network, configured to reduce dimensionality and learn features.

Also, determining the geometric shape can be performed using neural networks. Features of the geometric shape can be determined using a geometric feature extraction. This feature extraction can be compared with known signal shapes or standard geometric shapes. A similarity measure can be computed to determine and/or approximate the geometric shape. The geometric shape can be based on signal characteristics and their corresponding signal characteristic values. Thereto, the shape signal cluster may envelope signal segments with significant signal characteristics values. Significance of a characteristics value may be determined based on corresponding thresholds.

The neural network can comprise a decision tree model and/or a support vector machine. The network may be trained on labeled data, preferably with known signal shapes, such that the trained model may predict and/or determine the shape of the signal.

Determining the geometric shape may comprise refining the geometric shape which receives an initial shape determination from the machine learning model, i.e., neural network, and performs the step of processing the initial shape determination by applying filters and/or morphological operations to provide a post-processed signal shape.

The geometric shape can be determined as a single shape. The single shape can be a unique shape, an approximation of a known shape and/or a combination of sub-shapes preferably based known shapes. A shape can be defined as a set of closed trajectories, respectively closed shapes depending on the dimensionality of the analysis space. For example, the shape of signals can be determined in the time-frequency-space, i.e., a two-dimensional space. Alternatively, the shape of a signal cluster can be determined based on a latent space representation of the signal in a feature representation of the signal in a latent vector space. Herein the shape can define a multi-dimensional enveloping shape. The shape can be defined discretely in terms of parameter values for the corresponding dimensions and/or functional as a curve, e.g. a spline.

According to an embodiment, the at least one signal attribute can comprise a signal classifier. The method can comprise the step of determining a common signal classifier for the signal cluster according to the corresponding signal classifiers of the signal segments within the signal cluster. The signal classifier can indicate a signal type of the corresponding signal segment.

The signal classifier can be a unique label, preferably referencing the signal source, signal type, signal pattern, informational content, and/or a combination of the previous, in particular a unique combination of signal characteristics. The signal classifier can be locally unique and/or globally unique. Thereby a set of neighboring clusters can be differentiated from each other, respectively all clusters in a signal domain can be uniquely differentiated from each other. The signal classifier can also indicate the presence of a signal in reference to a SNR-threshold such that the classifier may also provide a distinction between empty segments comprising no signal and signal segments comprising a signal component.

The signal segments can have a heterogeneous classifier distribution. The method can comprise analyzing the distribution of the classifiers, identifying common features, and applying domain adaptation techniques such that common features can be identified forming a common set of properties for the signal. Thereto, a common signal classifier can be based on a set of properties shared among the signal segments of the identified cluster.

The signal classifier can be a single value attributed to the signal segment. For example, the signal classifier can be a signal attribute and/or a signal class probability value. Determining a common signal classifier can comprise determining an average of the signal classifier distribution, e.g., an average of the signal class probability values. Alternatively any signal parameter can serve as a basis to determine a common signal parameter, respectively common signal classifier.

Determining the common signal classifier can comprise determining an average or a weighted average of the signal class probability values of the corresponding signal segments.

According to a further embodiment, determining the common signal classifier can comprise determining a majority signal classifier of the signal segments within the signal cluster.

The common signal classifier can be a majority signal classifier according to the largest number of signal segments within a cluster having the same signal classifier. The majority signal classifier can be determined based on characteristic groups of signal segments having the same or similar signal classifiers. An inhomogeneous cluster can be assigned a majority signal classifier based on sections of the cluster having identical signal classifiers. For example, the majority signal classifier can correspond to a classifier according to a cohesive set or sets of signal segments within the same classifier. Herein, the cohesive sets within the cluster may not form the absolute majority but may form a significant section of the cluster, in particular having a high significance due to the uniformity in signal classifier within the cluster.

The majority signal classifier can be determined based on weights applied to the corresponding signal classifiers of the signal segments in the cluster. The weights can be determined according to signal parameters and/or signal characteristics, respectively a significance value attributed to these parameters and characteristics. For example, signal segments comprising significant signal components can have a higher relevance when determining the common signal classifier.

Additionally or alternatively, the common signal classifier can be determined according to a similarity measure of signal classifiers. Thereto, a distribution of similar signal classifiers within a cluster can be unified with a single common signal classifier. In particular, a signal classifier can be attributed to single common signal classifier based on the similarity measure.

According to an advantageous embodiments the at least one signal attribute can comprise a signal feature vector, wherein the signal feature vector is configured to uniquely identify the signal comprised in the signal segment.

The signal feature vector can be a latent space representation of the signal data. Preferably, the signal feature vector can be a feature extraction of the signal data. The signal feature vector can be a signal fingerprint, defined as a dimensionally reduced representation of the feature extraction.

Feature extraction may take the signal data as input and can generate a feature map. In this step, relevant features can be identified from the signal data. In particular, this can create a more informative and/or structured data set for the analysis. The feature extraction can be controlled by a parameter set. The parameter set can be used to determine the features that are to be extracted from the data.

Once the features have been extracted, they can be reduced to a predetermined dimension that is smaller than the original dimension of the feature extraction. This step can be used to generate a unique feature vector. Various aggregation functions, such as min, average and max pooling, as well as more complex methods such as LSTM autoencoders, can be implemented to achieve dimension reduction.

The projection of signals into a high-dimensional latent vector space can provide the advantage of being able to capture the inherent structures and relationships within the data that may not be apparent in the original measurements. In this space, signals can be represented as points or vectors, with the distance between them representing a measure of their similarity. This similarity measure or distance measure can be used as a basis for deciding which class a particular signal can be assigned to.

Due to the complexity of the signals contained in the signal data in particular, a machine-learning-based method can be used advantageously. The impact of signal artefacts, signal noise and/or signal interference on the signal classification, respectively on determining a common signal classifier to be reduced. Specifically, multidimensional patterns can be recognized to enable accurate classification of the signals. Accordingly, feature extraction can be based on a Convolutional Neural Network (CNN), a Recurrent Neural Network (RNN), a Generative Adversarial Network (GAN) and/or other network architectures.

The method can further comprise indexing the signal feature vectors according to the corresponding signal segment indices. Additionally, the method can comprise aggregating the signal feature vectors into a geometric feature vector of the signal cluster defining at least one of the geometric shape, a signal attribute evolution over time, an amplitude, frequency or phase distribution overtime. The geometric fingerprint can be configured to uniquely identify the signal cluster.

The signal segment indices can correspond to indexed partitions of the space the signal data is mapped to. For example, the indices can correspond to time and frequency of signal data represented in these dimensions. Alternatively, the indices can correspond to segmented dimensions of a multidimensional latent vector space. Specifically a vectors space suitable to represent the generated signal feature vectors, i.e., signal fingerprints. The indexing can correspond to a dimension resolution parameter, which can be predetermined or automatically adjusted.

Aggregating the signal feature vectors can correspond to mapping the signal feature vectors of a signal cluster to a single feature vector, i.e., the geometric fingerprint, attributed to the signal cluster. The geometric fingerprint may reference the determined geometric shape of the signal cluster, preferably in addition to a characteristic parameter set, e.g., represented as a feature vector.

The geometric fingerprint can capture intrinsic signal characteristics, in particular related to timing and sub-frequency components. The geometric fingerprint can comprise a time-series of feature vectors. Each feature vector can be an embedding of a specific portion of the signal's frequency spectrum. Thereto the geometric fingerprint can be a granular representation of the signal data.

The method can comprise determining a swing-in dynamic of the signal data according to the geometric fingerprint. Additionally, the method can comprise selective filtering of signal-associated fingerprints pertaining to selected sub-frequencies. This can achieve the advantage that specific signal components can be isolated for further analysis. Based on the geometric fingerprints, new signal and/or emitter classifiers can be determined.

According to a further embodiment, the method can comprise determining an emitter classifier of the signal cluster, in particular according to a distribution of values of at least one signal attribute over the signal elements of the signal cluster. The emitter classifier can indicate a source of the signal captured in the signal data frame, preferably a re-identifiable signal source.

The signal classifier may distinguish different types of signals and/or the emitter classifier may distinguish different emitters of the same type of signal. Specifically in radar signal analysis, the distinction between a signal classifier and an emitter classifier can be crucial for understanding and interpreting the data collected by radar systems.

A signal classifier can be primarily concerned with the characteristics of the signal data, e.g., the radar signals, themselves. It may involve analyzing parameters such as frequency, phase, amplitude, and/or pulse repetition interval. The signal can be categorized into a class based on its features, which can be compared to a library of known signal types.

Classifying an emitter can comprise identifying the source of the signal data. In addition to the signal parameters, also context data relating to reception conditions and contexts in which the signal is received can be considered. The context data can include a location and/or movement pattern of an emitter, respectively the corresponding effects in the signal data. This classification can provide insights into the type of emitter system in use and its potential capabilities. The emitter classification can include pattern recognition and can also be based on machine learning to match the signal data to existing emitter profiles. Emitter specific characteristics can be linked to an emitter antenna design and function and/or a receiver antenna design and function.

Performing the signal detection can comprise a signal-to-noise analysis indicating a probability for the presence of a signal against background noise. A segment can be labelled as a signal segment when a corresponding probability value exceeds a threshold value.

The method can comprise determining a signal detection probability. A predetermined and/or signal specific noise threshold value can be determined to distinguish a signal from noise. Each signal segment can be assigned with a signal detection probability. The signal detection probability can be used as a measure to mark a corresponding signal segment as comprising a signal or as no comprising a signal. As an alternative to a binary marker, the signal detection probability can be evaluated on a continuous spectrum, preferably in conjunction with signal detection probabilities of adjacent signal segments. For example a set of signal segments can be marked as comprising a signal when a sufficient, i.e., predetermined number of signal segments has a sufficiently high, i.e., exceeding a probability threshold, signal detection probability for each signal segment.

The signal detection can be performed by a neural network, e.g., an autoencoder, to differentiate a signal from noise. The neural network can be trained to separate a signal from noise according to learned signal characteristics. Also, the threshold value can be individually determined, preferably using a neural network. For example, the neural network can set a SNR threshold value according to a potential signal type. Detecting a signal can depend on a segment resolution. The method can comprise varying the segment scaling to increase a signal detection probability. The neural network can be configured to determine an optimal segment scaling, e.g., grid size, to maximize a signal detection probability. Maximizing a signal detection probability can be performed under the constraint of minimizing false positives.

The method can further comprise the step of determining a bounding box of the signal cluster. Additionally, the method can comprise generating an output frame comprising the signal cluster, the bounding box, the geometric shape, the common signal classifier, and/or the geometric fingerprint.

A bounding box for a cluster of signal segments can be defined as an area, preferably a rectangular area, that encloses the entire cluster, i.e. all signal segments marked as a cohesive signal. The bounding box can be defined by coordinates in the time-frequency plane that represent the minimum and maximum extents of the cluster. The bounding box may define an outer limit for signal segments associated to the corresponding cluster. The bounding box may be configured to unambiguously differentiate a cluster from further clusters. For example, the bounding box can be configured to separate adjacent clusters. Bounding boxes of adjacent clusters may overlap. Preferably, the overlap does not comprise signal segments, but only empty segments.

According to a further embodiment, the method can comprise the step of receiving a training data set. The training data set can comprise a plurality of signal data frames. A signal data frame of the plurality of signal data frames can comprise at least one signal. The training data set can also comprise data frames without a signal, i.e., a signal frame only comprising noise.

Training data can relate to real signal data captured by a receiver and/or virtual signal data synthetically generated to increase a sample size for training a machine learning algorithm. The signal data frames can be prepared according to the previous method embodiments. Preferably, each signal data frame corresponds to a bounding box comprising a single signal, respectively signal cluster. Each data frame can comprise a specific parameter interval, e.g., a predetermined time interval and/or frequency interval. Alternatively, a plurality of separate signals can be comprised I n a single signal data frame. Preferably, the signals of the plurality of separate signals do not overlap with one another such that the corresponding bounding boxes may not intersect with one another.

Training frames only comprising noise can increase the performance of the detection model, respectively the training of the detection model. The model can learn the characteristics of an empty signal frame to better distinguish noise from a signal.

Additionally the method can further comprise receiving annotation data. The annotation data can comprise a list of signals present in the corresponding signal data frame, define a signal classifier for each signal present in the corresponding signal data frame, the time interval of each signal and/or the frequency interval of each signal,

The annotation data can provide a reference for the signal classification, for example to train a neural network, e.g., an autoencoder. Further the training data can be used as a comparison base for unannotated signal data.

Annotation data for signal data can refer to a label or tag of a raw signal data representing metadata, and/or attributes to provide context for the machine learning algorithm. The annotation data can enable pattern recognition and facilitate a training process of the machine learning algorithm to increase accuracy of generated signal classifiers.

The signal data may capture individual detections of dynamic objects, which are grouped into clusters and labeled. Based on the annotated data a signal perception can be trained to accurately detect and classify signals, e.g., specific data signals, specific emitters and/or specific signal patterns. Pertaining to annotated radar data the annotation can comprise information relating to a receiver, transmission time, weather conditions, emitter, signal encoding, transmitted data, emitter position, receiver position, transmission distance, velocity of the emitter and/or receiver,

In a further beneficial embodiment the method can comprise the step of generating an indexed grid according to analysis parameters. The analysis parameters can comprise grid parameters defining a segmenting interval in a first signal domain and/or a segmenting interval in a second domain, a first interval of the signal frame in the first domain and/or a second interval of the signal frame in the second domain. The method can further comprise the steps of mapping the signal data frame onto the indexed grid and/or annotating signal segments of the indexed grid according to the annotation data with the corresponding signal classifier to generate a training frame per signal.

The first signal domain can be the frequency domain. The second signal domain can be the time domain. Alternatively, the analysis parameters can relate to a plurality of domain intervals and a plurality of corresponding segmenting intervals. The method can include adjusting the clustering parameters depending on the segmenting interval. For example, a fine segmenting grid can generate empty segments between signal segments, where a coarser segmenting grid would generate neighboring signal segments. Thereto, the clustering can be adjusted to adjust parameters defining a cluster to vary the allowed number of empty segments between signal segments that are still allocated to the same cluster. The signal cluster can comprise a distributed set, i.e., a point cloud, of signal segments. A maximum distance between signal segments can depend on the segmenting interval. Also the clustering can define a maximum distance from a center of mass of the signal cluster for any signal segment to be still attributed to the corresponding cluster. The geometric shape can be determined based on a minimum signal segment density threshold. For example, outlying signal segments may still be associated with the cluster, but due to their sparse distribution may not fall into the geometric shape.

Also, the method can comprise the step of providing a plurality of training frames to a training task of a machine learning component. The training task can be configured to use a cost function comprising a weighted sum of a classification error function and a cognition component to train the machine learning component. The cognition component relates to a signal classification mapping.

The signal classification mapping can comprise a vector difference of an output vector of the machine learning component and a parameter vector comprising a signal attribute vectorized according to the indexed grid.

The signal classification mapping can be a signal classification output, e.g., a signal detection matrix comprising a feature vector, respectively signal fingerprint for each grid cell for which a signal is detected. The cost function can consider the segments that are indicated to comprise a signal In other words, the cost function may only process the signal segments and not the empty segments. The mapping can be considered as an identification grid, labelling segments comprising a signal, i.e., masking signal segments for extracting the classification output from. These signal segments can form summands in the cost function for the signal classification per segment. Restricting the selection to signal segments can increase the performance of the cost function. For example, considering a sparse signal distribution and taking all segments into account, the cost function can be dominated by the label "no signal" and may optimize for assigning a "no signal" label to every segment. Balancing the cost function can comprise weighting based on a size attribute of the signal cluster. Thus, each signal class can have an equal impact, for example, when there is a small radar pulse and a big com signal in the frame. The size attribute can be based on an extension of the signal cluster in the frequency-time domain, an area of the geometric shape of the corresponding cluster, and/or a number of signal segments associated with the cluster.

The training model comprises an end-to-end training process, beginning with a pre-processing phase that may involve a training set of training frames, e.g., I/Q data frames. For I/Q data, each training frame can be annotated with signal information, including the start and end times, as well as the minimum and maximum frequencies of the signals contained within.

During pre-processing, a grid can be established in both the time and frequency domains, and the annotated data can be normalized and/or mapped onto this grid. The signal can be individually represented on their respective grids, creating a stack of augmented grids.

The training task can be governed by a unique cost function, which can be a weighted sum of two distinct components. The first component can be a standard classification error, configured to assess an accuracy of the model in identifying signal classes. The second component can comprise a comparison between a truth data grid and the model's output data grid. The truth data grid can be transformed into a binary vector, where each entry corresponds to the center of a grid cell. The binary status can indicate the presence or absence of a signal. Active cells can be assigned a positive parameter value, while inactive cells can be assigned a negative value of the same magnitude.

According to another preferable embodiment, the method can comprise the step of generating the parameter vector which references each segment in the indexed grid. The parameter vector can comprise a first parameter value of the signal attribute when a segment is marked as comprising a signal and a second parameter value when a segment is marked as not comprising a signal.

A set of segments can relate to each segment in the indexed grid. Alternatively, a set of segments can relate only to segments comprising a signal, i.e., segments in which a signal is detected.

An active state, representing the presence of a signal, can be assigned a positive value, while an inactive state, indicating the absence of a signal, can be assigned a corresponding negative value.

This parameterization can correspond to the use of an activation function in a neural network, such that the output of neurons can be determined based on the received input.

Mapping the active state of a signal within a grid to a configured parameter and the inactive state to the negative of that parameter is a form of encoding can transform the binary status of grid cells into a numerical format. This format can increase efficiency in the processing of the data by the neural network. This technique is akin to the use of activation functions in neural networks, which help determine the output of neurons based on the input received.

The method can comprise the steps of generating, preferably by the machine learning component, an output vector of the same dimensions as the parameter vector, and/or determining the cognition component by calculating the squared sum of the difference between the parameter vector and the output vector.

The model's output grid can be represented as a float vector of identical size to the truth data vector. The second component of the cost function can then be calculated as the squared sum of the differences between these two vectors:

$$\text{Cost Function Component} = \sum_{i=1}^{n} (\text{truth vector}_i - \text{model output vector}_i)^2$$

By minimizing this component, the model can be trained to produce outputs that closely match the true signal distribution. The use of a squared term emphasizes larger errors, which can be particularly important in applications where avoiding large deviations from the actual signal is critical. The overall goal can be defined as adjusting the model's parameters, i.e., its weights and biases, such that the cost function is minimized, indicating that the model's predictions are as close to the truth as possible. This training process can comprise an optimization, e.g., a gradient descent, which iteratively adjusts the parameters in the direction that reduces the cost function.

The cost function can balance the need for precise signal classification with the fidelity of the model's output to the actual signal distribution across the grid. This can achieve the advantage that the model accurately classifies signals and also faithfully represents their presence within the grid, which can be beneficial for emitter re-identification.

A further advantageous embodiment of the method can comprise the step of determining an optimal grid resolution for generating the indexed grid preferably by varying the grid resolution to maximize a signal cluster separation.

Determining an optimal grid resolution can comprise optimizing for resolution and cluster separation. Maximizing signal cluster separation can correspond to enhancing the distinction between different signals, respectively emitters, enabling accurate identification and classification.

Determining an optimal grid resolution can comprise varying the resolution and assessing the impact on signal cluster separation. This can comprise using a statistical function, e.g. a geostatistical function configured to find a grid size maximizing the sum of a small-scale variance and a variance relating to spatial correlation. Removing the small-scale variance, can achieve a less noisy data and highlight an underlying spatial structure. The spatial relation variance can indicate the point beyond which there is no longer spatial autocorrelation.

By finding the grid size that maximizes these two components, a grid can be defined that is suitable for capturing essential characteristics of the data without being confounded by noise or losing important information. The characteristics can relate to structural features of the data in the time and/or frequency domain. By maximizing signal cluster separation, the method ensures that each emitter's signal is as distinct as possible, reducing the likelihood of misclassification and increasing the reliability of re-identify emitters and/or signals.

By finding the optimal resolution, the method avoids unnecessary computational complexity, ensuring that resources are used efficiently without compromising the quality of signal processing. The dynamic grid adjustment enables adapting to different signal environments and maintain high performance even under varying conditions.

According to a second aspect, the present invention relates to a computer program product, comprising computer-readable medium bearing instructions executable by a signal detection and classification system configured to receive and analyze a signal data frame. The instructions, when executed by the signal detection and classification system, can cause the signal detection and classification system to perform steps of the method according to any one of embodiments according to the first aspect.

According to a third aspect, the present invention relates to a computer-readable data carrier, comprising a non-transitory computer-readable medium. The medium has stored thereon a computer program according to an embodiment of the second aspect. The computer program, when executed by a signal detection and classification system, can cause the signal detection and classification system to perform the method according to any one of embodiments according to the first aspect.

According to a fourth aspect, the present invention relates to a system for detection and classification of wireless signals. The system can comprise a receiver component configured to receive a signal data frame comprising signal data in the signal domain, preferably the time-frequency-domain, and/or a signal transformation component configured to segment the signal data frame to generate a plurality of segments. The system can further comprise a signal processing component configured to perform a signal detection for each segment, and/or to identify signal segments comprising a signal. The signal processing component can further be configured to determine, preferably for each signal segment, at least one signal attribute. The signal attribute can be a signal classifier, a signal vector, and/or a signal fingerprint. Additionally, the signal processing component can be configured to cluster a set of signal segments of the plurality of signal segments preferably to generate a signal cluster, and preferably also to determine a geometric shape in the signal domain, preferably the frequency-time-domain, of the signal cluster.

In a further beneficial embodiment of the system, the signal processing component can be a machine learning component. The system can further comprise a training component configured to perform a training task and also comprise a pre-processing component. The pre-processing component can be configured to receive a training data set comprising a plurality of signal data frames. Each frame of the plurality of signal data frames can comprise at least one signal. The pre-processing component can further be configured to receive annotation data. The annotation data can comprise a list of signals present in the signal data frame, and preferably also define a signal classifier for each signal present in the corresponding signal data frame, the time interval of each signal, and/or the frequency interval of each signal.

Also, the pre-processing component can be configured to determine analysis parameters. The analysis parameters can comprise grid parameters defining a segmenting interval in the first signal domain, e.g., the frequency domain, and/or a segmenting interval in the second signal domain, e.g., the time domain, a first domain interval, e.g., a frequency interval of the signal frame, and/or a second domain interval, e.g., a ti of the signal frame. Additionally, the pre-processing component can be configured to map the signal data frame onto the indexed grid and/or to annotate signal segments of the indexed grid according to the annotation data with the corresponding signal classifier, preferably to generate a training frame per signal.

Further, the pre-processing component can be configured to provide a plurality of training frames to the training component. The training component can further be configured to train the machine learning component in particular using a cost function comprising a weighted sum of a classification error function and/or a cognition component. The cognition component can define a signal characteristics matrix corresponding to the defined grid. The defined grid can be a time-frequency-grid, in particular according to the analysis parameters.

BRIEF DESCRIPTION OF THE DRAWINGS

The subject matter will hereinafter be described in conjunction with the following drawing figures, wherein like numerals denote like elements, and wherein:

Fig. 1 is a schematic representation of the method in accordance with an embodiment;

Fig. 2 is a schematic representation of the system in accordance with an embodiment;

Fig. 3A is a schematic representation of signal domain grid comprising segments in accordance with an embodiment;

and

Fig. 3B is a further schematic representation of signal domain grid comprising segments in accordance with an embodiment.

DETAILED DESCRIPTION OF THE DRAWINGS

The following detailed description is merely exemplary in nature and is not intended to limit the invention and uses of the invention. Furthermore, there is no intention to be bound by any theory presented in the preceding background or the following detailed description.

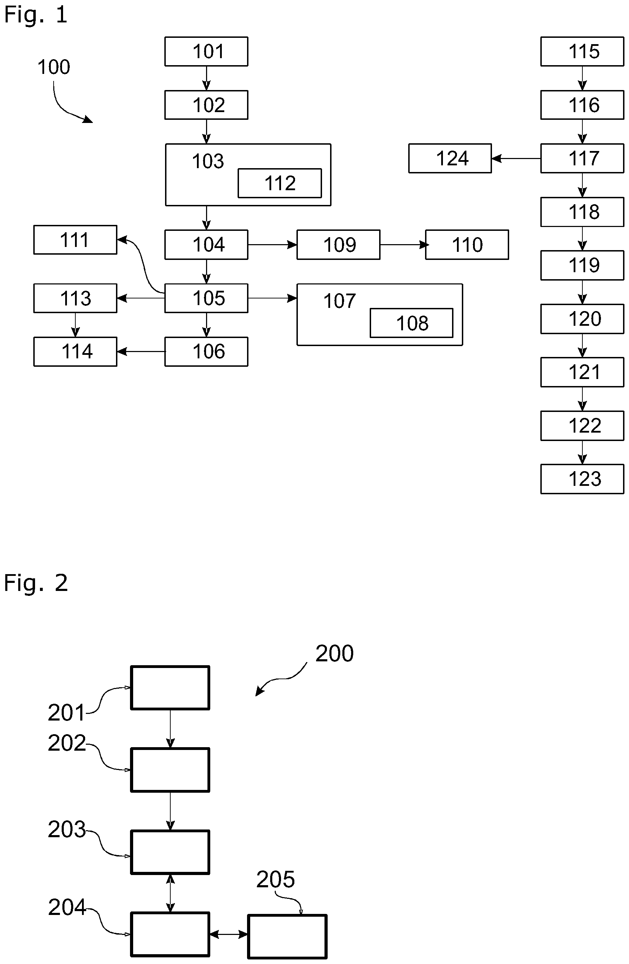

FIG. 1 illustrates an embodiment of the method 100 for the detection and classification of wireless signals, particularly suited for signal reconnaissance applications. The method 100 begins with the step of receiving 101 a signal data frame that contains signal data within a frequency-time-signal domain. This frame is then segmented 102 to produce multiple segments for further analysis. Each segment undergoes signal detection 103 to identify those containing a signal. For every segment with a signal, the method involves determining 104 at least one signal attribute, preferably a signal classifier, attribute vector, and/or fingerprint.

The method further includes the subsequent step of clustering 105 a set of signal segments to form a signal cluster and determining 106 a geometric shape within the frequency-time-signal domain for this cluster. If the signal attribute includes a signal classifier, the method includes a step for determining 107 a common signal classifier for the cluster, based on the classifiers of the individual segments. In cases where the common classifier is derived from the majority, the method can include determining 108 the majority signal classifier within the cluster.

Additionally, the method can include generating a signal feature vector, i.e., a fingerprint, for each signal segment. These fingerprints are then indexed 109 and aggregated 110 into a geometric feature vector that defines the signal cluster's geometric shape, signal attribute evolution over time, and/or distributions of amplitude, frequency, and/or phase over time. This aggregation results in a geometric fingerprint that uniquely identifies the signal cluster.

To facilitate emitter re-identification, the method can include determining 111 an emitter classifier for the signal cluster, based on the distribution of signal attribute values across the signal elements of the cluster. This classifier indicates a re-identifiable source of the signal captured in the data frame.

The method can also encompass performing a signal-to-noise analysis 112 during signal detection, labeling a segment as a signal segment when the probability of signal presence exceeds a certain threshold. For signal clusters, the method includes determining 113 a bounding box and generating 114 an output frame that comprises the signal cluster, bounding box, geometric shape, common signal classifier, and/or geometric fingerprint.

In the context of machine learning, the method can involve receiving 115 a training dataset comprising multiple signal data frames, each with at least one signal, and receiving 116 corresponding annotation data. An indexed grid is generated 117 based on analysis parameters, onto which the signal data frame is mapped 118. Signal segments are annotated 119 according to the annotation data with their respective signal classifiers to create training frames for each signal.

These training frames are provided 120 to a machine learning component's training task, which utilizes a cost function comprising a weighted sum of a classification error function and a cognition component. The cognition component is defined by the vector difference between the machine learning component's output vector and a parameter vector that is vectorized according to the indexed grid.

The method further includes generating 121 a parameter vector that references each segment in the indexed grid, with the parameter vector containing a first parameter value for segments with a signal and a second parameter value for segments without. The machine learning component generates 122 an output vector of the same dimensions as the parameter vector, and the cognition component is determined 123 by calculating the squared sum of the differences between these two vectors.

The method may also include determining 124 an optimal grid resolution for the indexed grid by varying the resolution to maximize signal cluster separation, enhancing the method's effectiveness in signal detection and classification tasks.

Fig. 2 shows a schematic representation of the system 200 designed for the detection and classification of wireless signals. The system is comprised of several key components that work in tandem to process signal data within the frequency-time domain.

The system comprises a receiver component 201, which is responsible for capturing signal data frames. These frames contain the raw signal data that will be subjected to further analysis. Once the data is received, it is passed on to the signal transformation component 202 which can segment the signal data frame into multiple segments, thereby preparing the data for detailed processing.

The signal processing component 203 can perform signal detection on each segment to identify those that contain a signal. For segments that do comprise a signal, the component determines at least one signal attribute, which could be a signal classifier, a vector, or a fingerprint.

The signal processing component 203 can be a machine learning component, which is supported by a training component 204 and a pre-processing component 205. The pre-processing component 205 is tasked with handling a training data set made up of multiple signal data frames, each containing one or more signals. It also processes annotation data, which lists the signals in each frame, assigns a signal classifier to each, and notes their time and frequency intervals.

Furthermore, the pre-processing component 205 establishes analysis parameters, including grid parameters that define segmenting intervals in both the frequency and time domains, as well as the overall time and frequency intervals for the signal frames. It then maps the signal data frames onto an indexed grid and annotates the signal segments on this grid using the annotation data. Each annotated segment is turned into a training frame for each signal.

These training frames are then fed to the training component 204, which uses them to train the machine learning component 203. The training is guided by a cost function that balances a classification error function with a cognition component. This cognition component is responsible for creating a signal characteristics matrix that corresponds to the defined time-frequency grid. This matrix is crucial for the machine learning component to accurately classify the signals based on their features extracted from the time-frequency grid.

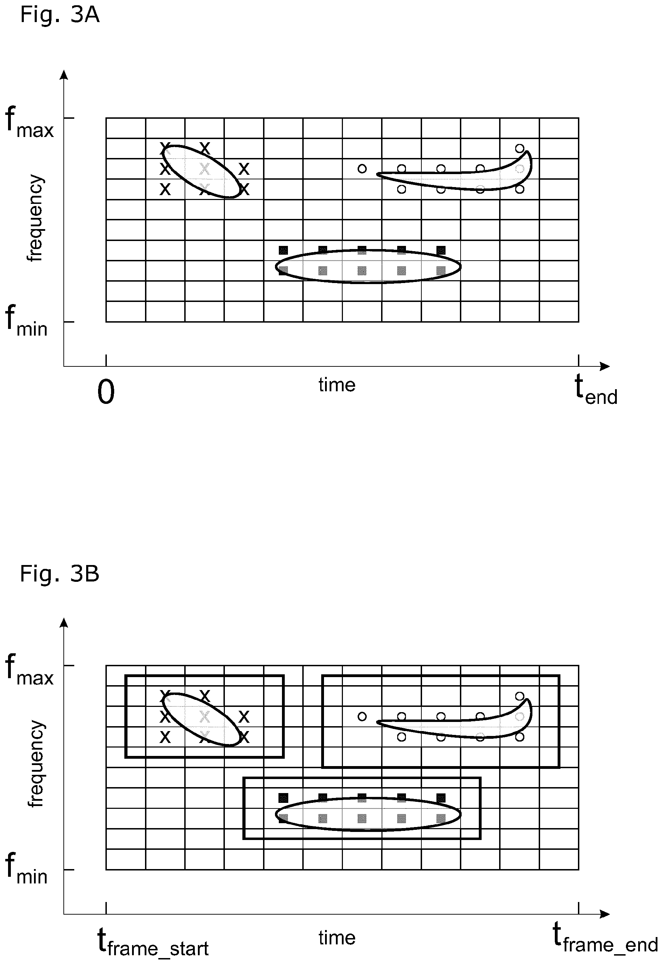

Fig. 3A depicts a schematic representation of a plurality of signals, respectively signal clusters, in the frequency-time domain. The input data, in form of I/Q data is processed, preferably by a deep-learning model to detect the presence of a signal for each grid-cell. A grid-cell is a predetermined frequency-time-interval. For each grid-cell a cell-signal-fingerprint is determined. In the frequency-time-domain, the presence of a signal in a grid-cell can be marked. Cells corresponding to the same signal cluster can be marked with the same symbol or marker. For each cell a signal detection probability, a predicted signal class and/or a cell-signal-fingerprint can be determined. The grid can be formed within a specified frequency interval defined by a minimum frequency $f_{min}$ and a maximum frequency $f_{max}$. Additionally the time interval can be defined by a start time, e.g., t=0, and an end time, $t_{end}$.

The signal representation can comprise the geometric shape associated with the corresponding cluster.

FIG. 3B depicts a schematic representation of a plurality of signals in the frequency-time domain which are further processed based on the representation shown in FIG. 3A. Specifically, the data and corresponding representation is processed by performing a cluster analysis to identify clusters from the detected signal segments.

This enables extracting actionable insights from the data, as clusters of grid-cells are identified where signals have been detected. Each cluster, representing a grouped collection of signal segments, describes a detected signal within the time-frequency domain, represented as a rasterized segmented area. The signal class associated with each detected signal can be determined through a majority vote based on the classifications of the individual grid-cells. The cell-signal-fingerprints are then aggregated, indexed by their respective grid-cells, and attached to the detected signal, forming a comprehensive geometric signal-fingerprint.

The geometric signal-fingerprint serves as a unique identifier for an RF signal, providing resolution in both time and frequency. For the grid the relative is updated to match absolute a start time and/or an absolute end time of the I/Q frame. Also, FIG. 3B depicts bounding box for each corresponding cluster.

**Claims**

1. Method (100) for detection and classification of wireless signals in signal reconnaissance applications, comprising the steps of

   receiving (101) a signal data frame comprising signal data in a signal domain;
   segmenting (102) the signal data frame to generate a plurality of segments;
   Detecting (103) a signal for each segment to identify signal segments comprising a signal; and
   determining (104), for each signal segment, at least one signal attribute (signal classifier /attribute vector / fingerprint);
   clustering (105) a set of signal segments of the plurality of signal segments to generate a signal cluster;
   determining (106) a geometric shape in the signal domain of the signal cluster.

2. Method (100) according to claim 1, wherein the at least one signal attribute comprises a signal classifier; and wherein the method further comprises the step of
   determining (107) a common signal classifier for the signal cluster according to the corresponding signal classifiers of the signal segments within the signal cluster, wherein the signal classifier indicates a signal type of the corresponding signal segment.

3. Method (100) according to claim 2,
   wherein determining (107) the common signal classifier comprises determining (108) the majority signal classifier of the signal segments within the signal cluster.

4. Method (100) according to any one of the preceding claims, wherein the at least one signal attribute comprises a signal feature vector,
wherein the signal feature vector is configured to uniquely identify the signal comprised in the signal segment.

5. Method (100) according to any one of the preceding claims, comprising the steps of

indexing (109) the signal feature vectors according to the corresponding signal segment indices, and
aggregating (110) the signal feature vectors into a geometric feature vector of the signal cluster defining at least one of the geometric shape, a signal attribute evolution over time, an amplitude, frequency or phase distribution over time,

wherein the geometric fingerprint is configured to uniquely identify the signal cluster.

6. Method (100) according to any one of the preceding claims, comprising the step of
determining (111) an emitter classifier of the signal cluster according to a distribution of values of at least one signal attribute over the signal elements of the signal cluster,
wherein the emitter classifier indicates a re-identifiable source of the signal captured in the signal data frame.

7. Method (100) according to any one of the preceding claims, wherein Detecting (103) the signal comprises performing (112) a signal-to-noise analysis indicating a probability for the presence of a signal against background noise, wherein a segment of the plurality of segments is labelled as a signal segment when a corresponding probability value exceeds a threshold value.

8. Method (100) according to claim 2 and 5, comprising the steps of

determining (113) a bounding box of the signal cluster, and
generating (114) an output frame comprising the signal cluster, the bounding box, the geometric shape, the common signal classifier, and the geometric fingerprint.

9. Method (100) according to any one of the preceding claims, comprising the steps of

receiving (115) a training data set comprising a plurality of signal data frames,
receiving (116) annotation data, wherein the annotation data comprises a list of signals present in the corresponding signal data frame, defines a signal classifier for each signal present in the corresponding signal data frame, the time interval of each signal and the frequency interval of each signal,
generating (117) an indexed grid according to analysis parameters, wherein the analysis parameters comprise grid parameters defining a segmenting interval in a first signal domain and a segmenting interval in a second signal domain, a first interval of the signal frame in the first signal domain and a second interval of the signal frame in the second signal domain;
mapping (118) the signal data frame onto the indexed grid;
annotating (119) signal segments of the indexed grid according to the annotation data with the corresponding signal classifier to generate a training frame per signal;
providing (120) a plurality of training frames to a training task of a machine learning component;
wherein the training task is configured to use a cost function comprising a weighted sum of a classification error function and a cognition component to train the machine learning component, wherein the cognition component relates to a signal classification mapping.

10. Method (100) according to claim 9, wherein the method comprises the steps of

generating (121) a parameter vector which references a set of segments in the indexed grid, wherein the parameter vector comprises a first parameter value of the signal attribute when a segment is marked as comprising a signal and a second parameter value when a segment is marked as not comprising a signal;
generating (122), by the machine learning component, an output vector of the same dimensions as the parameter vector;
determining (123) the cognition component by calculating the squared sum of the difference between the parameter vector and the output vector.

**11.** Method (100) according to any one of claims 9 and 10, wherein the method comprises the steps of determining (124) an optimal grid resolution for generating the indexed grid by varying the grid resolution to maximize a signal cluster separation.

**12.** A computer program product, comprising:

computer-readable medium bearing instructions executable by a signal detection and classification system configured to receive and analyse a signal data frame,

wherein the instructions, when executed by the signal detection and classification system, cause the signal detection and classification system to perform steps of the method according to anyone of claims 1 to 11.

**13.** Computer-readable data carrier, comprising:

a non-transitory computer-readable medium;

wherein the medium has stored thereon a computer program according to claim 12; wherein the computer program, when executed by a signal detection and classification system, causes the signal detection and classification system to perform the method according to any one of claims 1 to 11.

**14.** System (200) for detection and classification of wireless signals, comprising

a receiver component (201) configured to receive a signal data frame comprising signal data in the signal domain;

a signal transformation component (202) configured to segment the signal data frame to generate a plurality of segments;

a signal processing component (203) configured

to perform a signal detection for each segment,

to identify signal segments comprising a signal,

to determine, for each signal segment, at least one signal attribute (signal classifier /vector / fingerprint),

to cluster a set of signal segments of the plurality of signal segments to generate a signal cluster, and

to determine a geometric shape in the signal domain of the signal cluster.

**15.** System (200) according to claim 14, wherein the signal processing component (203) is a machine learning component, wherein the system (200) comprises a training component (204) configured to perform a training task and a pre-processing component (205), wherein the pre-processing component (205) is configured to:

receive a training data set comprising a plurality of signal data frames, wherein each frame of the plurality of signal data frames comprises at least one signal;

receive annotation data, wherein the annotation data comprises a list of signals present in the signal data frame, defines a signal classifier for each signal present in the corresponding signal data frame, the time interval of each signal and the frequency interval of each signal;

determine analysis parameters, wherein the analysis parameters comprise grid parameters defining a segmenting interval in a first signal domain and a segmenting interval in a second signal domain, a first domain interval of the signal frame and a second domain interval of the signal frame;

map the signal data frame onto the indexed grid;

annotate signal segments of the indexed grid according to the annotation data with the corresponding signal classifier to generate a training frame per signal;

provide a plurality of training frames to the training component (204),

wherein the training component (204) is further configured to:

train the machine learning component (203) using a cost function comprising a weighted sum of a classification error function and a cognition component, wherein the cognition component defines a signal characteristics matrix corresponding to the defined grid.

**Amended claims in accordance with Rule 137(2) EPC.**

**1.** Method (100) for detection and classification of wireless signals in signal reconnaissance applications, comprising the steps of

receiving (101) a signal data frame comprising signal data in a signal domain, wherein the signal data is represented in a multidimensional space;

segmenting (102) the signal data frame to generate a plurality of segments;
Detecting (103) a signal for each segment to identify signal segments comprising a signal; and
determining (104), for each signal segment, at least one signal attribute;
clustering (105) a set of signal segments of the plurality of signal segments to generate a signal cluster, wherein clustering involves grouping similar signal segments together based on their signal attributes;
determining (106) a geometric shape in the signal domain of the signal cluster, wherein the geometric shape is multidimensional.

2. Method (100) according to claim 1, wherein the at least one signal attribute comprises a signal classifier, wherein the signal classifier is a unique label referencing a unique combination of signal characteristics; and
wherein the method further comprises the step of
determining (107) a common signal classifier for the signal cluster according to the corresponding signal classifiers of the signal segments within the signal cluster, wherein the signal classifier indicates a signal type of the corresponding signal segment.

3. Method (100) according to claim 2,
wherein determining (107) the common signal classifier comprises determining (108) the majority signal classifier of the signal segments within the signal cluster.

4. Method (100) according to any one of the preceding claims, wherein the at least one signal attribute comprises a signal feature vector,
wherein the signal feature vector is configured to uniquely identify the signal comprised in the signal segment,

wherein the signal feature vector is a feature extraction of the signal data,
wherein the feature extraction takes the signal data as input and generates a feature map.

5. Method (100) according to any one of the preceding claims, comprising the steps of

indexing (109) the signal feature vectors according to corresponding signal segment indices, wherein the signal segment indices correspond to indexed partitions of the space the signal data is mapped to, and
aggregating (110) the signal feature vectors into a geometric feature vector of the signal cluster defining at least one of the geometric shape, a signal attribute evolution over time, an amplitude, frequency or phase distribution over time,
wherein aggregating the signal feature vectors corresponds to mapping the signal feature vectors of a signal cluster to a single feature vector, which is the geometric fingerprint, attributed to the signal cluster, and
wherein the geometric fingerprint is configured to uniquely identify the signal cluster.

6. Method (100) according to any one of the preceding claims, comprising the step of

determining (111) an emitter classifier of the signal cluster according to a distribution of values of at least one signal attribute over the signal elements of the signal cluster,
wherein the emitter classifier indicates a re-identifiable source of the signal captured in the signal data frame.

7. Method (100) according to any one of the preceding claims, wherein Detecting (103) the signal comprises performing (112) a signal-to-noise analysis indicating a probability for the presence of a signal against background noise, wherein a segment of the plurality of segments is labelled as a signal segment when a corresponding probability value exceeds a threshold value.

8. Method (100) according to claim 2 and 5, comprising the steps of

determining (113) a bounding box of the signal cluster, and
generating (114) an output frame comprising the signal cluster, the bounding box, the geometric shape, the common signal classifier, and the geometric fingerprint.

9. Method (100) according to any one of the preceding claims, comprising the steps of

receiving (115) a training data set comprising a plurality of signal data frames,
receiving (116) annotation data, wherein the annotation data comprises a list of signals present in the corresponding signal data frame, defines a signal classifier for each signal present in the corresponding signal data frame, the time interval of each signal and the frequency interval of each signal,

generating (117) an indexed grid according to analysis parameters, wherein the analysis parameters comprise grid parameters defining a segmenting interval in a first signal domain and a segmenting interval in a second signal domain, a first interval of the signal frame in the first signal domain and a second interval of the signal frame in the second signal domain;

mapping (118) the signal data frame onto the indexed grid;

annotating (119) signal segments of the indexed grid according to the annotation data with the corresponding signal classifier to generate a training frame per signal;

providing (120) a plurality of training frames to a training task of a machine learning component;

wherein the training task is configured to use a cost function comprising a weighted sum of a classification error function and a cognition component to train the machine learning component, wherein the cognition component relates to a signal classification mapping,

wherein detecting (103) a signal comprises frequency pattern recognition and/or temporal signal pattern recognition according to learned signal patterns.

10. Method (100) according to claim 9, wherein the method comprises the steps of

generating (121) a parameter vector which references a set of segments in the indexed grid, wherein the parameter vector comprises a first parameter value of the signal attribute when a segment is marked as comprising a signal and a second parameter value when a segment is marked as not comprising a signal;

generating (122), by the machine learning component, an output vector of the same dimensions as the parameter vector;

determining (123) the cognition component by calculating the squared sum of the difference between the parameter vector and the output vector.

11. Method (100) according to any one of claims 9 and 10, wherein the method comprises the steps of

determining (124) an optimal grid resolution for generating the indexed grid by varying the grid resolution to maximize a signal cluster separation.

12. A computer program product, comprising:

computer-readable medium bearing instructions executable by a signal detection and classification system configured to receive and analyse a signal data frame,

wherein the instructions, when executed by the signal detection and classification system, cause the signal detection and classification system to perform steps of the method according to any one of claims 1 to 11.

13. Computer-readable data carrier, comprising:

a non-transitory computer-readable medium;

wherein the medium has stored thereon a computer program according to claim 12; wherein the computer program, when executed by a signal detection and classification system, causes the signal detection and classification system to perform the method according to any one of claims 1 to 11.

14. System (200) for detection and classification of wireless signals, comprising

a receiver component (201) configured to receive a signal data frame comprising signal data in the signal domain, wherein the signal data is represented in a multidimensional space;

a signal transformation component (202) configured to segment the signal data frame to generate a plurality of segments;

a signal processing component (203) configured

to perform a signal detection for each segment,
to identify signal segments comprising a signal,
to determine, for each signal segment, at least one signal attribute,
to cluster a set of signal segments of the plurality of signal segments to generate a signal cluster, wherein clustering involves grouping similar signal segments together based on their signal attributes, and
to determine a geometric shape in the signal domain of the signal cluster, wherein the geometric shape is multidimensional.

**15.** System (200) according to claim 14, wherein the signal processing component (203) is a machine learning component, wherein the system (200) comprises a training component (204) configured to perform a training task and a pre-processing component (205), wherein the pre-processing component (205) is configured to:

receive a training data set comprising a plurality of signal data frames, wherein each frame of the plurality of signal data frames comprises at least one signal;

receive annotation data, wherein the annotation data comprises a list of signals present in the signal data frame, defines a signal classifier for each signal present in the corresponding signal data frame, the time interval of each signal and the frequency interval of each signal;

determine analysis parameters, wherein the analysis parameters comprise grid parameters defining a segmenting interval in a first signal domain and a segmenting interval in a second signal domain, a first domain interval of the signal frame and a second domain interval of the signal frame;

generate an indexed grid according to the analysis parameters;

map the signal data frame onto the indexed grid;

annotate signal segments of the indexed grid according to the annotation data with the corresponding signal classifier to generate a training frame per signal;

provide a plurality of training frames to the training component (204),

wherein the training component (204) is further configured to:

train the machine learning component (203) using a cost function comprising a weighted sum of a classification error function and a cognition component, wherein the cognition component defines a signal characteristics matrix corresponding to the defined grid,

wherein detecting a signal comprises frequency pattern recognition and/or temporal signal pattern recognition according to learned signal patterns.

Fig. 1

Fig. 2

Fig. 3A

Fig. 3B

Europäisches
Patentamt
European
Patent Office
Office européen
des brevets

## EUROPEAN SEARCH REPORT

**Application Number**

EP 24 18 3306

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUFNI SHAZWANI AHMAD ET AL: "ECG signals classification based on discrete wavelet transform, time domain and frequency domain features", 2015 2ND INTERNATIONAL CONFERENCE ON BIOMEDICAL ENGINEERING (ICOBE), IEEE, 30 March 2015 (2015-03-30), pages 1-6, XP033215127, DOI: 10.1109/ICOBE.2015.7235914 [retrieved on 2015-09-01] * page 2 - page 4 * ----- | 1-15 | INV. G06F18/24 |
| A | COSOLI GLORIA ET AL: "Wireless ECG and cardiac monitoring systems: State of the art, available commercial devices and useful electronic components", MEASUREMENT, INSTITUTE OF MEASUREMENT AND CONTROL. LONDON, GB, vol. 177, 10 March 2021 (2021-03-10), XP086567932, ISSN: 0263-2241, DOI: 10.1016/J.MEASUREMENT.2021.109243 [retrieved on 2021-03-10] * the whole document * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 27 November 2024 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)